(19)

Europäisches Patentamt
European Patent Office
Office européen des brevets

(11)     **EP 4 379 842 A1**

(12)                         **EUROPEAN PATENT APPLICATION**
                         published in accordance with Art. 153(4) EPC

(43) Date of publication:
     **05.06.2024   Bulletin 2024/23**

(21) Application number: **23753067.0**

(22) Date of filing: **02.02.2023**

(51) International Patent Classification (IPC):
     *H01M 4/13* (2010.01)          *H01M 4/139* (2010.01)
     *H01M 4/04* (2006.01)          *H01M 10/0525* (2010.01)
     *H01M 4/02* (2006.01)

(52) Cooperative Patent Classification (CPC):
     **H01M 4/02; H01M 4/04; H01M 4/13; H01M 4/139;**
     **H01M 10/0525;** Y02E 60/10

(86) International application number:
     **PCT/KR2023/001518**

(87) International publication number:
     **WO 2023/153716 (17.08.2023 Gazette 2023/33)**

(84) Designated Contracting States:
     **AL AT BE BG CH CY CZ DE DK EE ES FI FR GB**
     **GR HR HU IE IS IT LI LT LU LV MC ME MK MT NL**
     **NO PL PT RO RS SE SI SK SM TR**
     Designated Extension States:
     **BA**
     Designated Validation States:
     **KH MA MD TN**

(30) Priority:  **09.02.2022   KR 20220016609**

(71) Applicant: **LG Energy Solution, Ltd.**
     **Seoul 07335 (KR)**

(72) Inventors:
     • **JOO, Mun Kyu**
       **Daejeon 34122 (KR)**
     • **LEE, Ilha**
       **Daejeon 34122 (KR)**
     • **KIM, Sarah**
       **Daejeon 34122 (KR)**
     • **JEON, Seoyoung**
       **Daejeon 34122 (KR)**
     • **KWON, Yohan**
       **Daejeon 34122 (KR)**
     • **CHAE, Jonghyun**
       **Daejeon 34122 (KR)**

(74) Representative: **Hoffmann Eitle**
     **Patent- und Rechtsanwälte PartmbB**
     **Arabellastraße 30**
     **81925 München (DE)**

(54)     **TRANSFER LAMINATE, METHOD FOR MANUFACTURING ANODE FOR LITHIUM SECONDARY BATTERY, ANODE FOR LITHIUM SECONDARY BATTERY, AND LITHIUM SECONDARY BATTERY COMPRISING ANODE**

(57)     The present application relates to a negative electrode for a lithium secondary battery, a method for manufacturing a lithium secondary battery, and a lithium secondary battery.

[Figure 1]

**Description**

[Technical Field]

This application claims priority to and the benefit of Korean Patent Application No. 10-2022-0016609 filed in the Korean Intellectual Property Office on February 9, 2022, the entire contents of which are incorporated herein by reference.

The present application relates to a transfer laminate, a manufacturing method of a negative electrode for a lithium secondary battery, a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte solution, and a separator. The negative electrode includes a negative electrode active material for intercalating and deintercalating lithium ions to and from the positive electrode, and silicon-containing particles having a high discharge capacity may be used as the negative electrode active material.

In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-containing materials have attracted attention due to their low cost and high capacity (4200 mAh/g).

However, when a silicon-containing negative electrode active material is used, a problem arises in that the initial irreversible capacity is large. That is, in the charging and discharging reaction of the lithium secondary battery, lithium discharged from the positive electrode is intercalated into the negative electrode during charging, and is deintercalated from the negative electrode to return to the positive electrode again during discharging. In the case of the silicon-containing negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In order to solve the above problem, known is a pre-lithiation method of a silicon negative electrode including a silicon-containing negative electrode active material. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

In order to use the existing electrochemical method, the wet process should be performed within the electrolyte, which poses risks such as fire and explosion, so it was necessary to control an inert environment well. That is, when creating the environment, it is difficult to control conditions such as moisture control by using inert gas in a room where the electrochemical method is performed. In addition, in order to uniformly control the initial irreversible capacity, a rate of pre-lithiation should be slowed down as much as possible using an electrochemical method, so a problem arises in that the production cost increases in the application of the electrochemical method.

In addition, in a lithium metal transfer process of the pre-lithiation process, it is difficult to transfer lithium metal safely and easily, and lithium is not transferred from a transfer laminate, or even if lithium metal is transferred, the highly reactive lithium metal immediately starts reacting with an electrode active material, thereby causing problems such as particle breakage on a surface of an electrode active material layer.

Therefore, it is necessary to research a process condition and a material with which it is possible to easily transfer lithium metal to a top of an electrode active material layer during a lithium metal transfer process, and to uniformly pre-lithiate lithium in the electrode active material layer in a more safe and efficient manner when pre-lithiating an electrode.

Prior Art Document

Japanese Patent Application Publication No. 2009-080971

[Detailed Description of the Invention]

[Technical Problem]

In the pre-lithiation process, the lithium metal transfer process includes a process of transferring lithium metal from the transfer laminate to the top of the electrode active material layer. In this case, it was found through research that a degree of transfer of lithium metal can be adjusted depending on a surface property of a base layer of the transfer laminate.

Accordingly, the present application relates to a transfer laminate, a manufacturing method of a negative electrode for a lithium secondary battery, a negative electrode for a lithium secondary battery, and a lithium secondary battery including a negative electrode.

[Technical Solution]

An exemplary embodiment of the present specification provides a transfer laminate including: a base layer; a release layer on one surface of the base layer; and a lithium metal layer on a surface of the release layer opposite to a surface of the release layer in contact with the base layer, in which a thickness of the release layer is 0.1 um or greater and 10 um or less, and in which an average surface roughness (Sa) of the base layer is 50 nm or greater.

Another exemplary embodiment provides a manufacturing method of a negative electrode for a lithium secondary battery, the manufacturing method including: providing a negative electrode for the lithium secondary battery including a negative electrode current collector layer and a negative electrode active material layer on one surface or both surfaces of the negative electrode current collector layer; transferring a lithium metal layer by laminating the transfer laminate according to the present application onto a surface of the negative electrode active material layer opposite to a surface in contact with the negative electrode current collector layer; and pre-lithiating the negative electrode active material layer.

Still another exemplary embodiment of the present application provides a negative electrode for a lithium secondary battery manufactured by the manufacturing method of a negative electrode for a lithium secondary battery according to the present application.

Finally, there is provided a lithium secondary battery including a positive electrode; the negative electrode for a lithium secondary battery according to the present application; a separator between the positive electrode and the negative electrode; and an electrolyte.

[Advantageous Effects]

The transfer laminate according to the exemplary embodiment of the present invention is used in a lithium transfer process for pre-lithiation of a negative electrode. In this case, in the transfer laminate according to the present application, the thickness of the release layer may satisfy the certain range and the average surface roughness (Sa) of the base layer may satisfy the range of 50 nm or greater. As described above, the thickness of the release layer satisfies the above range to improve the coating uniformity of the release layer. The average surface roughness of the base layer satisfies the above range, so that when such base layer is used, the peeling force between the release layer and the base layer is improved.

That is, the average surface roughness of the base layer according to the present application satisfies the above range, which may cause a decrease in a contact area of an interface between the base layer and the release layer, resulting in a decrease in wettability to improve the peeling force between the base layer and the release layer.

Accordingly, the lithium metal layer and release layer on the transfer laminate can be easily peeled off and transferred to the negative electrode active material layer in the lithium transfer process, and problems of reverse transfer to the base layer or by-product generation during pre-lithiation, which is caused when the base layer is not peeled off, can be solved.

That is, the negative electrode for a lithium secondary battery according to the present invention includes the transfer laminate of the present invention and thus enables pre-lithiation to be performed more efficiently and uniformly throughout the entire negative electrode active material layer without loss of lithium during the pre-lithiation process.

[Brief Description of Drawings]

FIG. 1 shows a process of transferring lithium metal to a negative electrode for a lithium secondary battery according to an exemplary embodiment of the present application.

FIG. 2 shows a laminated structure of a lithium secondary battery according to an exemplary embodiment of the present application.

<Explanation of Reference Numerals and Symbols>

10:     negative electrode current collector layer
20:     negative electrode active material layer
35:     lithium metal layer
30:     release layer
40:     base layer
50:     separator
60:     positive electrode current collector layer
70:     positive electrode active material layer
100:    negative electrode for lithium secondary battery
200:    transfer laminate
300:    positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (center particle diameter, average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle diameter distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a transfer laminate including: a base layer; a release layer on one surface of the base layer; and a lithium metal layer on a surface of the release layer opposite to a surface of the release layer in contact with the base layer, in which a thickness of the release layer is 0.1 um or greater and 10 um or less, and in which an average surface roughness (Sa) of the base layer is 50 nm or greater.

The transfer laminate according to an exemplary embodiment of the present invention is used in a lithium transfer process for pre-lithiation of a negative electrode. In this case, in the transfer laminate according to the present application, the average surface roughness (Sa) of the base layer may satisfy a range of 50 nm or greater. As described above, the average surface roughness of the base layer satisfies the above range, so that when such base layer is used, the peeling force between the release layer and the base layer is improved.

Hereinafter, specific details of the transfer laminate of the present invention will be described.

In an exemplary embodiment of the present application, the transfer laminate includes a base layer; a release layer on one surface or both surfaces of the base layer; and a lithium metal layer on a surface of the release layer opposite to a surface of the release layer in contact with the base layer.

In an exemplary embodiment of the present application, an average surface roughness (Sa) of the base layer may be 50 nm or greater.

In another exemplary embodiment, the average surface roughness (Sa) of the base layer may be 50 nm or greater or 55 nm or greater, and may satisfy a range of 0.1 um or less, and preferably 90 nm or less.

In an exemplary embodiment of the present application, the upper limit of the average surface roughness (Sa) of the base layer can be used without limitation as long as it is smaller than a thickness of the release layer to be coated together.

In an exemplary embodiment of the present application, there is provided the transfer laminate in which the average surface roughness (Sa) of the base layer is smaller than the thickness of the release layer.

In an exemplary embodiment of the present application, the average surface roughness may refer to a surface roughness. The average surface roughness indicates a degree of roughness of a surface and may indicate a degree of unevenness of a surface of a target material.

As described above, the base layer according to the present application has the range of the average surface roughness, which may cause a decrease in a contact area of an interface between the base layer and the release layer, resulting in a decrease in wettability to improve the peeling force between the base layer and the release layer.

In an exemplary embodiment of the present application, the base layer can be used without limitation as long as it has features capable of withstanding process conditions such as high temperature in a step of depositing lithium metal, and preventing a reverse peeling problem that lithium metal is transferred to the base layer during a winding process for transferring the deposited lithium metal, and also satisfies the average surface roughness value described above.

There is provided the transfer laminate in which the base layer of the present application is one or more selected from the group consisting of polyethylene terephthalate (PET), polyethylenenaphtalate (PEN), polyimide (PI), poly(methylmethacrylate)(PMMA), polypropylene, polyethylene and polycarbonate.

In an exemplary embodiment of the present application, the average surface roughness (Sa) value of the base layer may satisfy the average surface roughness value of the base layer described above when appropriately changing a type and particle size of a material to be added to the base layer, a particle size and thickness of a material to be formed into a film if a surface treatment of the base layer is performed, or an etching condition and a time if a plasma treatment is performed.

That is, the average surface roughness of the base layer according to the present application may be formed to be within the above-described range by adjusting the composition and content of the base layer or by performing the surface treatment on the base layer.

Specifically, the average surface roughness of the base layer may be adjusted in a processing step of the base layer. That is, processes of melting polyester chips, extruding the melted chips with a die, and then rapidly cooling the same to form a non-crystalline sheet, and uniformly stretching the sheet in longitudinal and transverse directions while heating the sheet are performed, and the above-described average surface roughness may be satisfied by improving heat treatment conditions after processing or the stretching process. In addition, the above-described average surface roughness may be satisfied by a surface coating using inorganic particles or polymer in the melting step or stretching step.

Further, the surface treatment on the base layer may satisfy the average surface roughness according to the present application by additionally forming a film of inorganic particles or polymer on the processed base layer. Specifically, a phenomenon that a surface of the base layer is etched through a plasma treatment using $O_2$ and $CF_X$ gas can be caused to occur, thereby making it possible to satisfy the average surface roughness range of the base layer according to the present application.

In an exemplary embodiment of the present application, a thickness of the base layer may be 1 um or greater and 300 um or less, and may satisfy a range of 5 um or greater and 200 um or less, and 10 um or greater and 100 um or less.

When the thickness of the base layer is satisfied as described above, transfer from the release layer can be further facilitated, so that it can serve as a transfer laminate during transfer of the lithium metal layer.

In an exemplary embodiment of the present application, the base layer may have a release layer on at least one surface, or may have release layers formed on both surfaces. The release layer makes it possible to prevent a reverse peeling problem that lithium metal is transferred to the base layer during a winding process for transferring a deposited lithium metal layer to the negative electrode, and also makes it possible to easily separate the base layer after transferring lithium metal onto the negative electrode active material layer.

The release layer may include one or more species selected from the group consisting of silicon-modified polyester in which a silicon chain is graft-linked to a polyester main chain, an acryl resin, Si, melamine, and fluorine.

In an exemplary embodiment of the present application, the release layer may be formed by a coating method. For example, the coating method may be a method selected from the group consisting of dip coating, spray coating, spin coating, die coating, gravure coating, micro-gravure coating, comma coating, ink-jet coating, bar coating, wire-bar coating, and roll coating, but is not limited thereto. That is, various coating methods that can be used to form a coating layer in the art can be used.

In an exemplary embodiment of the present application, there is provided the transfer laminate in which the thickness of the release layer is 0.1 um or greater and 10 um or less, and the average surface roughness (Sa) of the base layer is smaller than the thickness of the release layer.

In another exemplary embodiment, the thickness of the release layer may be 0.1 um or greater and 10 um or less, preferably 0.3 um or greater and 5 um or less, and more preferably 0.4 um or greater and 1 um or less.

The release layer is transferred on top of the negative electrode active material layer, together with the lithium metal layer in a lithium metal transfer process described later, and the coating uniformity of the release layer can be increased when the thickness of the release layer and the average surface roughness of the base layer satisfy the above-described ranges. In addition, the release layer is also included later on the top of the negative electrode, and when the above-described thickness range is satisfied, a problem of increasing battery resistance is not caused.

In an exemplary embodiment of the present application, a lithium metal layer provided on a surface of the release layer opposite to a surface in contact with the base layer may be included.

The lithium metal layer may be used as a metal for pre-lithiation of a negative electrode active material layer in a pre-lithiation process to be described later.

In an exemplary embodiment of the present application, the deposition method for depositing the lithium metal layer onto the base layer having the release layer formed thereon may be selected from vacuum thermal evaporation deposition, chemical vapor deposition (CVD) and physical vapor deposition, but is not limited thereto, and various deposition methods that are used in the art may be used.

In an exemplary embodiment of the present application, a thickness of the lithium metal layer may be 1 um or greater and 10 um or less, and preferably may satisfy a range of 3 um or greater and 10 um or less.

The thickness of the lithium metal layer satisfies the above-described range, so that the transfer of the lithium metal to the negative electrode active material layer can occur efficiently, the reverse transfer can be prevented, and the negative electrode active material layer can be pre-lithiated to a desired extent.

In an exemplary embodiment of the present application, there is provided the transfer laminate in which releasing force of a surface of the release layer in contact with the base layer is 100 gf/inch or less, and a cross-cut test value of the surface of the release layer in contact with the base layer is 0B to 1B.

In an exemplary embodiment of the present application, the releasing force of the surface of the release layer in contact with the base layer may satisfy a range of 100 gf/inch or less.

In another exemplary embodiment, the releasing force of the surface of the release layer in contact with the base layer may satisfy a range of 100 gf/inch or less, preferably 50 gf/inch or less, and more preferably 30 gf/inch or less, and a range of 5 gf/inch or greater, and preferably 10 gf/inch or greater.

The releasing force may be measured by a 90° peel test at a speed of 300 mm/minute using UTM equipment (LF-PLUS) after preparing a base layer coated with a release layer, cutting the same into a width of 2.54 cm (1 inch), and attaching Nitto-31B tape.

As described above, the releasing force satisfies the specific range, so that, as compared with a case in which conventional releasing force of 500 gf/inch or greater is provided, when the base layer according to the present application is used, the releasing force is lowered to remove only the base layer more easily, and the problem of reverse transfer to the base layer can also be addressed.

In an exemplary embodiment of the present application, there is provided the transfer laminate in which a cross-cut test value of the surface of the release layer in contact with the base layer is 0B to 1B.

The adhesive force can be measured by preparing a transfer laminate in which a base layer, a release layer, and a lithium metal layer are sequentially laminated, and conducting a cross-cut test according to ASTM3359, and specifically, can be measured under conditions of 5B (0% peeling), 4B (less than 5% peeling), 3B (5% to 15% peeling), 2B (15% to 35% peeling), 1B (35% to 65% peeling) and 0B (65% or more peeling).

The above-described cross-cut test results are satisfied, indicating that when a base layer of a specific condition is used, the releasing force with the release layer is improved, thereby further facilitating the transfer of the release layer and the lithium metal layer onto the negative electrode active material layer.

An exemplary embodiment of the present application provides a manufacturing method of a negative electrode for a lithium secondary battery, the manufacturing method including: providing a negative electrode for the lithium secondary battery including a negative electrode current collector layer and a negative electrode active material layer on one surface or both surfaces of the negative electrode current collector layer; transferring a lithium metal layer by laminating the transfer laminate according to the present application onto a surface of the negative electrode active material layer opposite to a surface in contact with the negative electrode current collector layer; and pre-lithiating the negative electrode active material layer.

Below, the manufacturing method of a negative electrode for a lithium secondary battery will be described in more detail.

The manufacturing method of a negative electrode for a lithium secondary battery according to an exemplary embodiment of the present application includes a step of forming a negative electrode for a lithium secondary battery by forming a negative electrode current collector layer and a negative electrode active material layer on one surface or both surfaces of the negative electrode current collector layer.

The step is a step of forming a negative electrode for a lithium secondary battery, and the step of forming a negative electrode current collector layer and a negative electrode active material layer on one surface or both surfaces of the negative electrode current collector layer includes a step of coating a negative electrode slurry including a negative electrode active material layer composition on one surface or both surfaces of the negative electrode current collector layer, and the negative electrode active material layer composition may include one or more selected from the group consisting of a silicon-containing active material, a negative electrode conductive material and a negative electrode binder.

In an exemplary embodiment of the present application, the negative electrode slurry may include a negative electrode active material layer composition, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In an exemplary embodiment of the present application, the slurry solvent is not limited thereto as long as it can dissolve the negative electrode active material layer composition, but specifically, acetone, distilled water or NMP may be used.

A negative electrode according to an exemplary embodiment of the present application may be formed by coating and drying the negative electrode slurry on the negative electrode current collector layer.

Through the drying step, the slurry solvent in the negative electrode slurry may be dried, and then an electrode roll-pressing step may be further included.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, the negative electrode current collector layer may have a thickness of 1 um or greater and 100 um or less, and the negative electrode active material layer may have a thickness of 20 um or greater and 500 um or less.

However, the thicknesses may be variously modified depending on a type and use of the negative electrode used, and are not limited thereto.

An exemplary embodiment of the present application includes a negative electrode active material layer including a negative electrode active material layer composition formed on one surface or both surfaces of the negative electrode current collector layer.

In an exemplary embodiment of the present application, the negative electrode active material layer composition may include a silicon-containing active material; a negative electrode conductive material; and a negative electrode binder.

In an exemplary embodiment of the present application, the silicon-containing active material may include one or more selected from the group consisting of Si particle, $SiO_x$ (0<x<2), SiC, a metal impurity, and a Si alloy.

In an exemplary embodiment of the present application, the silicon-containing active material may include one or more selected from the group consisting of $SiO_x$ (x=0) and $SiO_x$ (0<x< 2), and may include the $SiO_x$ (x=0) in an amount of 70 parts by weight or more on the basis of 100 parts by weight of the silicon-containing active material.

In another exemplary embodiment, $SiO_x$ (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-containing active material.

In an exemplary embodiment of the present application, for the silicon-containing active material, pure silicon (Si) may be particularly used as the silicon-containing active material. The use of pure silicon (Si) as the silicon-containing active material may mean that, on the basis of 100 parts by weight of the total silicon-containing active material as described above, pure Si particles ($SiO_x$ (x=0)) not bonded to other particles or elements are included within the above range.

The capacity of the silicon-containing active material is significantly higher than that of a graphite-based active material that is typically used, so that there have been more attempts to apply the same. However, the volume expansion rate of the silicon-containing active material during charging/discharging is high, so that only a small amount thereof is mixed and used with a graphite-based active material. In addition, despite the above-described advantages, the initial irreversible capacity is large and the lifetime is reduced. In order to solve the problems, a pre-lithiation process of lithiating a negative electrode in advance is performed.

Therefore, according to the present invention, the main object of the present invention is to provide a transfer laminate enabling a lithium metal layer to be transferred more smoothly on top of a negative electrode active material layer in order to solve the above problems, while using only a silicon-containing active material with a high content as a negative electrode active material in order to improve capacity performance.

An average particle diameter (D50) of the silicon-containing active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-containing active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the silicon-containing active material generally has a characteristic BET surface area. The BET surface area of the silicon-containing active material is preferably 0.01 to 150.0 $m^2/g$, more preferably 0.1 to 100.0 $m^2/g$, particularly preferably 0.2 to 80.0 $m^2/g$, and most preferably 0.2 to 18.0 $m^2/g$. The BET surface area is measured in accordance with DIN 66131 (using nitrogen).

In an exemplary embodiment of the present application, the silicon-containing active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-containing active material may be included in an amount of 60 parts by weight or more, on the basis of 100 parts by weight of the negative electrode active material layer composition.

In another exemplary embodiment, the silicon-containing active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode active material layer composition according to the present application uses a conductive material and a binder capable of controlling the volume expansion rate during charging and discharging even when the silicon-containing active material having a significantly high capacity is used in the above range. Accordingly, even when the silicon-containing active material is within the above range, the negative electrode active material layer composition does not degrade performance of the negative electrode and has excellent output characteristics in charging and discharging.

In an exemplary embodiment of the present application, the silicon-containing active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1, in which A is an area and P is a boundary line.

$$[\text{Equation 1}]$$

$$4\pi A/P^2$$

In the related art, it is general to use only graphite-based compounds as the negative electrode active material. However, in recent years, as the demand for high-capacity batteries is increasing, attempts to mix and use silicon-containing compounds are increasing in order to increase capacity. However, the silicon-containing compounds have limitations in that the volume rapidly expands during the charging/discharging, resulting in damage to the conductive path formed in the negative electrode active material layer to degrade the performance of the battery.

Accordingly, in an exemplary embodiment of the present application, the negative electrode conductive material may include one or more selected from the group consisting of a particulate conductive material, a linear conductive material, and a planar conductive material.

In an exemplary embodiment of the present application, the particulate conductive material refers to a conductive material that may be used so as to improve conductivity of the negative electrode and has conductivity without causing a chemical change. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can improve conductivity by increasing surface contact between silicon particles in the negative electrode and at the same time suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode active material layer composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500m$^2$/ g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-containing active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-containing active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-containing active material as in the present invention, in terms of configuration and role.

In an exemplary embodiment of the present application, the planar conductive material that is used as the negative electrode conductive material described above has a different structure and role from those of the carbon-containing active material that is generally used as the negative electrode active material. Specifically, the carbon-containing active material that is used as the negative electrode active material may be artificial graphite or natural graphite, and refers to a material that is processed and used into a spherical or particulate shape so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-containing active material as an active material means that the carbon-containing active material is processed into a particulate or spherical shape and used as a material for storing or releasing lithium.

That is, in an exemplary embodiment of the present application, artificial graphite or natural graphite, which is a carbon-containing active material, may have a BET specific surface area that satisfies a range of 0.1 m²/g or greater and 4.5 m²/g or less. In addition, plate-like graphite, which is a planar conductive material, has a planar shape, and a BET specific surface area thereof may be 5 m²/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-containing active material. When such roles are satisfied, all of the general binders can be applied. Specifically, an aqueous binder may be used, and more specifically, a PAM-based binder may be used.

In an exemplary embodiment of the present application, the step of transferring the lithium metal layer by laminating the transfer laminate according to the present application on a surface of the negative electrode active material layer opposite to a surface in contact with the negative electrode current collector layer is provided.

Details of the transfer laminate are the same as described above.

In an exemplary embodiment of the present application, there is provided the manufacturing method of a negative electrode for a lithium secondary battery in which the step of transferring the lithium metal layer by laminating the transfer laminate onto a surface of the negative electrode active material layer opposite to a surface in contact with the negative electrode current collector layer includes steps of laminating the transfer laminate such that a surface of the lithium metal layer opposite to a surface in contact with the release layer comes into contact with a surface of the negative electrode active material layer opposite to a surface in contact with the negative electrode current collector layer, and removing the base layer.

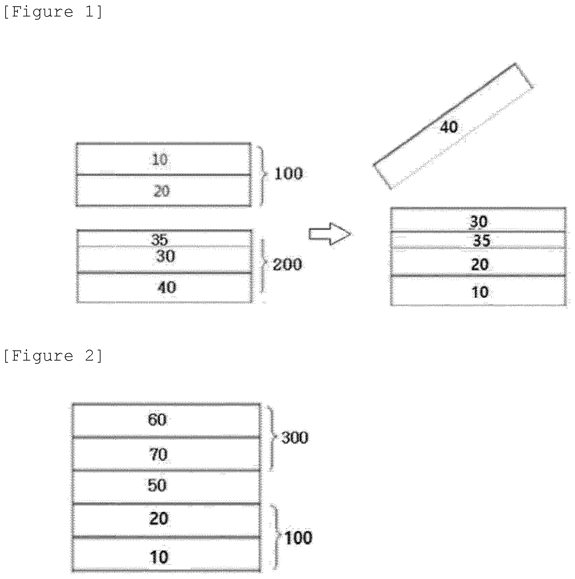

FIG. 1 shows a manufacturing method of a negative electrode for a lithium secondary battery according to an exemplary embodiment of the present application. Specifically, a process of preparing a transfer laminate 200 including a base layer 40, a release layer 30 and a lithium metal layer 35, laminating the transfer laminate such that the lithium metal layer 35 comes into contact with a negative electrode active material layer 20 of a negative electrode 100 for a lithium secondary battery, in which the negative electrode active material layer 20 is formed on a negative electrode current collector layer 10, and then removing the base layer 40 to transfer the lithium metal layer 35 on top of the negative electrode active material layer 20 is shown.

In particular, as described above, the step of transferring the lithium metal layer via the transfer laminate including the specific base layer according to the present application is included, so that the lithium metal layer can be more easily transferred.

In an exemplary embodiment of the present application, there is provided the manufacturing method of a negative electrode for a lithium secondary battery in which the lamination step is performed under a pressurization condition of 20 kgf/cm to 60 kgf/cm at a temperature condition of 20°C to 80°C.

The lamination may proceed with a transfer process through roll pressing. Thereafter, a process of removing the base layer is included. Upon removal, as the release layer according to the present application is included, direct contact between the lithium metal layer and the air can be prevented to protect the lithium metal layer. In addition, since the release layer is provided, the base layer can be easily removed even with a weak linear pressure, so the rate of pre-lithiation can be easily regulated. Also, the base layer is removed, so that the heat generated during pre-lithiation can be easily dissipated, thereby suppressing by-product generation.

In an exemplary embodiment of the present application, a step of pre-lithiating the negative electrode active material layer is provided.

The step of pre-lithiating the negative active material layer may be performed simultaneously with transferring the lithium metal layer on top of the negative electrode active material layer, and it can be confirmed that, when the lithium metal layer is completely removed as seen with naked eyes, the pre-lithiation has been completed.

In an exemplary embodiment of the present application, there is provided the manufacturing method of a negative electrode for a lithium secondary battery in which in the step of pre-lithiating the negative electrode active material layer, the negative electrode active material layer is pre-lithiated within 30 minutes to 48 hours after transferring lithium metal.

As described above, the base layer can be removed immediately after the lithium metal layer is transferred, and the removal of the base layer is easily performed, so that heat is easily dissipated during pre-lithiation in which the lithium metal layer and the negative electrode active material layer react, resulting in little by-product generation and uniform pre-lithiation in the negative electrode active material layer.

The pre-lithiation completion time may be calculated by measuring a period of time from the time of transferring the lithium metal to a time at which the transferred lithium metal is not observed on the surface of the negative electrode active material layer.

In an exemplary embodiment of the present application, there is provided a negative electrode for a lithium secondary battery manufactured by the manufacturing method of a negative electrode for a lithium secondary battery.

An exemplary embodiment of the present application provides a lithium secondary battery including a positive electrode; the negative electrode for a lithium secondary battery according to the present application; a separator provided between the positive electrode and the negative electrode; and an electrolyte.

The positive electrode may include a positive electrode current collector layer and a positive electrode active material layer formed on the positive electrode current collector layer and including the positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 um, and a surface of the positive electrode current collector layer may be formed with microscopic irregularities to enhance an adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-containing material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

FIG. 2 shows a laminated structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 300 for a lithium secondary battery including a positive electrode active material layer 70 on one surface of a positive electrode current collector layer 60 can be seen, and the negative electrode 100 for a lithium secondary battery and the positive electrode 300 for a lithium secondary battery are formed in a laminated structure with a separator 50 interposed therebetween.

In this case, a part of the release layer transferred together during pre-lithiation may be removed depending on the electrolyte solution used, and accordingly, a small amount thereof is included on top of the negative electrode. In FIG. 2, the release layer is not shown.

In an exemplary embodiment of the present application, the electrolyte solution may include an organic liquid electrolyte solution, an inorganic liquid electrolyte solution, a solid polymer electrolyte, a gel-type polymer electrolyte solution, a solid inorganic electrolyte solution, a molten-type inorganic electrolyte solution and the like that may be used in the manufacturing of the lithium secondary battery, but is not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

An exemplary embodiment of the present invention provides a battery module including the lithium secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Description of Embodiments

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

**<Manufacture of Transfer Laminate>**

A film coated with an acrylic resin as a release layer on a polyethylene terephthalate base layer was prepared. Lithium metal was deposited on the acrylic resin release layer of the film to form a lithium metal layer having a thickness of 6 um by thermal evaporation, thereby preparing a transfer laminate. In this case, EWK-050 available from ULVAC, Inc. was used as the deposition apparatus, and the deposition process was performed under conditions of the speed of 2.5 m/min, the temperature of the lithium supply unit of 500°C, and the temperature of the main roll of -25°C.

In the manufacture of the transfer laminate, transfer laminates satisfying the thickness of the base layer, the average surface roughness of the base layer, the type of the release layer, and the thickness of the release layer in Table 1 below were manufactured, respectively.

[Table 1]

|  | Average surface roughness of base layer | Type of release layer | Thickness of release layer | Thickness of base layer | Base layer |
|---|---|---|---|---|---|
| Example 1 | 58.6 nm ($\pm$5.3) | PMMA | 500 nm | 25 um | SG-05 available from SKC |
| Example 2 | 68.3 nm ($\pm$6.2) | PMMA | 500 nm | 50 um | SG-05 available from SKC |
| Compara tive Example 1 | 17.4 nm ($\pm$3.3) | PMMA | 500 nm | 25 um | RX-600 available from Hyosung |
| Compara tive Example 2 | 58.6 nm ($\pm$5.3) | PMMA | 50nm | 25 um | SG-05 available from SKC |

**<Manufacture of Negative Electrode>**

Si (average particle diameter (D50): 3.5 $\mu$m) serving as a silicon-containing active material, Denka black serving as a conductive material, SBR serving as a binder, and CMC serving as a thickener were added to distilled water serving as a solvent for forming a negative electrode slurry in a weight ratio of 80:15.8:3:1.2 to manufacture a negative electrode slurry (solid concentration: 25 wt.%).

As a mixing method, the conductive material, the binder, the thickener, and the water were dispersed at 2500 rpm for 30 minutes by using a homo mixer, and then the active material was added and dispersed therein at 2500 rpm for 30 minutes to manufacture a slurry.

The negative electrode slurry was coated on both surfaces of a copper current collector (thickness: 8 um) serving as a negative electrode current collector with a loading amount of 85 mg/25 cm$^2$, roll-pressed, and dried in a vacuum oven at 130°C for 10 hours to form a negative electrode active material layer (thickness: 33 pm), which was prepared as a negative electrode (thickness of negative electrode: 41 um, porosity of negative electrode: 40.0%).

The releasing force and cross-cut test results for the transfer laminates of Examples 1 and 2 and Comparative Examples 1 and 2 are shown in Table 2 below.

[Table 2]

|  | Releasing force (gf/inch) | Cross-cut test |
|---|---|---|
| Example 1 | 10 to 30 | 0B |
| Example 2 | 10 to 30 | 0B |
| Comparative Example 1 | 700 to 800 | 5B |
| Comparative Example 2 | 400 to 500 | 4B |

In Table 2, each test was performed under the following conditions.

**- Releasing force**

A 90° peel test was performed at a speed of 300 mm/minute using UTM equipment (LF-PLUS) after preparing the transfer laminate, cutting the same into a width of 2.54 cm (1 inch), and attaching Ichibang Nitto-31B tape to the electrode, and the value was recorded.

**- Cross-cut test**

The adhesive force was measured by preparing the transfer laminate in which the base layer, the release layer, and the lithium metal layer were sequentially laminated, and conducting a cross-cut test according to ASTM3359, and specifically, was measured under conditions of 5B (0% peeling), 4B (less than 5% peeling), 3B (5% to 15% peeling), 2B (15% to 35% peeling), 1B (35% to 65% peeling) and 0B (65% or more peeling).

The above-described cross-cut test results are satisfied, indicating that when a base layer of a specific condition is used, the releasing force with the release layer is improved, thereby further facilitating the transfer of the release layer and the lithium metal layer onto the negative electrode active material layer.

**<Progress of pre-lithiation process>**

Using the negative electrode manufactured above, the pre-lithiation process was progressed as follows. In order to transfer the transfer laminate to the negative electrode active material layer, the lithium metal layer of the transfer laminate was placed on top of the negative electrode active material layer, which was then subjected to roll-pressing at room temperature while applying a load of 40 kgf/cm.

**<Lithium loss calculation experiment after pre-lithiation>**

In order to confirm the loss of lithium transferred after pre-lithiation, a half bi-cell type battery was manufactured using the negative electrode (for which the pre-lithiation process was performed) prepared using the transfer laminate in Table 1 and a lithium metal foil as a counter electrode. For the electrolyte solution used in this battery, fluoro ethylene carbonate (FEC)/ethyl methyl carbonate (EMC) (=3/7 (volume ratio)) in which $1M$ $LiPF_6$ was dissolved was used.

In order to measure the lithium loss, an amount of pre-lithiated lithium was measured as a difference between first charging capacity values of the non pre-lithiated electrode and the pre-lithiated electrode, and the loss of lithium was calculated as a ratio of the capacity of pre-lithiated lithium to the theoretical capacity of lithium. A calculation expression thereof is Equation A below, and the results are shown in Table 3.

lithium loss (%) = 1-{("charging capacity of non pre- lithiated electrode" - "charging capacity of pre- lithiated electrode)/theoretical capacity of lithium used during pre-lithiation}　　　[Equation A]

[Table 3]

|  | Capacity of pre-lithiated lithium (mAh/cm$^2$) | Lithium loss (%) |
|---|---|---|
| Example 1 | 1.2 | 5.5 |
| Example 2 | 1.23 | 3.1 |
| Comparative Example 1 | 0.78 | 38.6 |
| Comparative Example 2 | 0.94 | 26.0 |

When transferred onto the negative electrode using the transfer laminates of Examples 1 and 2, the polyethylene terephthalate base layer could be removed immediately after roll pressing, and the lithium metal layer and the release layer were effectively transferred onto the negative electrode active material layer, which can be confirmed in Table 2 and Table 3. That is, it can be confirmed that the releasing force was formed low and the base layer could be effectively removed after transfer, and accordingly, heat generated during pre-lithiation was easily dissipated and by-product generation was suppressed, so the loss of lithium was also reduced.

On the other hand, Comparative Example 1 corresponds to a case in which the average surface roughness of the base layer is below the range of the present application, and Comparative Example 2 corresponds to a case in which the thickness of the release layer coated on the base layer is below the lower limit of the range of the present application. As can be seen from the results of Tables 2 and 3, in Comparative Examples 1 and 2, it can be confirmed that the releasing force with the release layer was high, so that the polyethylene terephthalate base layer was not immediately removed after roll pressing, and when the polyethylene terephthalate base layer was forcibly removed, the electrode of the negative electrode was separated, so that the polyethylene terephthalate base layer could not be removed after roll pressing. As a result, the base layer could be removed after about 4 hours, i.e., at the time when the pre-lithiation reaction in which the lithium metal layer was intercalated into the negative electrode was completed.

Accordingly, in the case of the negative electrodes of Comparative Examples 1 and 2, it can be confirmed that the base layer was not effectively removed to make it difficult to dissipate heat during pre-lithiation and to cause non-uniform pre-lithiation on the surface due to problems such as by-product generation, resulting in the increase in loss of lithium, and that the capacity of pre-lithiated lithium was also lower than in Examples 1 and 2.

**Claims**

1. A transfer laminate comprising:

   a base layer;
   a release layer on one surface of the base layer; and
   a lithium metal layer on a surface of the release layer opposite to a surface of the release layer in contact with the base layer,
   wherein a thickness of the release layer is 0.1 um or greater and 10 um less, and
   wherein an average surface roughness (Sa) of the base layer is 50 nm or greater.

2. The transfer laminate of claim 1, wherein the average surface roughness (Sa) of the base layer is smaller than the thickness of the release layer.

3. The transfer laminate of claim 1, wherein a releasing force of a surface of the release layer in contact with the base layer is 100 gf/inch or less, and
   wherein a cross-cut test value of the surface of the release layer in contact with the base layer is 0B to 1B.

4. The transfer laminate of claim 1, wherein a thickness of the lithium metal layer is 1 um or greater and 10 um or less.

5. The transfer laminate of claim 1, wherein a thickness of the base layer is 1 um or greater and 300 um or less.

6. The transfer laminate of claim 1, wherein the base layer comprises one or more selected from the group consisting of polyethylene terephthalate (PET), polyethylenenaphtalate (PEN), polyimide (PI), poly(methylmethacrylate)(PMMA), polypropylene, polyethylene and polycarbonate.

7. A manufacturing method of a negative electrode for a lithium secondary battery, the manufacturing method comprising:

   providing a negative electrode for the lithium secondary battery comprising a negative electrode current collector layer and a negative electrode active material layer on one surface or both surfaces of the negative electrode current collector layer;
   transferring a lithium metal layer by laminating the transfer laminate of any one of claims 1 to 6 onto a surface of the negative electrode active material layer opposite to a surface in contact with the negative electrode current collector layer; and
   pre-lithiating the negative electrode active material layer.

8. The manufacturing method of claim 7, wherein the transferring of the lithium metal layer by laminating the transfer laminate onto the surface of the negative electrode active material layer opposite to the surface in contact with the negative electrode current collector layer comprises laminating the transfer laminate such that a surface of the lithium metal layer opposite to a surface in contact with the release layer comes into contact with the surface of the negative electrode active material layer opposite to the surface in contact with the negative electrode current collector layer, and removing the base layer.

9. The manufacturing method of claim 7, wherein the laminating is performed under a pressurization condition of 20 kgf/cm to 60 kgf/cm at a temperature condition of 20°C to 80°C.

10. The manufacturing method of claim 7, wherein in the pre-lithiating of the negative electrode active material layer, the negative electrode active material layer is pre-lithiated within 30 minutes to 48 hours after transferring the lithium metal layer.

11. A negative electrode for a lithium secondary battery manufactured by the manufacturing method of a negative electrode for a lithium secondary battery of claim 7.

12. A lithium secondary battery comprising:

a positive electrode;
the negative electrode for a lithium secondary battery of claim 11;
a separator between the positive electrode and the negative electrode; and
an electrolyte.

[Figure 1]

[Figure 2]

## INTERNATIONAL SEARCH REPORT

International application No.

**PCT/KR2023/001518**

### A. CLASSIFICATION OF SUBJECT MATTER

**H01M 4/13**(2010.01)i; **H01M 4/139**(2010.01)i; **H01M 4/04**(2006.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); C23C 26/00(2006.01); H01M 10/052(2010.01); H01M 10/058(2010.01); H01M 10/42(2006.01); H01M 4/04(2006.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전사 적층체(transfer laminate), 이형층(release layer), 리튬 금속층(lithium metal layer), 표면 조도(surface roughness), 전사(transfer), 리튬 전지(lithium battery), 음극(anode)

### C. DOCUMENTS CONSIDERED TO BE RELEVANT

| Category* | Citation of document, with indication, where appropriate, of the relevant passages | Relevant to claim No. |
|---|---|---|
| Y | KR 10-2015-0132319 A (SION POWER CORPORATION) 25 November 2015 (2015-11-25) See paragraphs [0021], [0024], [0031], [0087]-[0092], [0151] and [0153]; and figure 2b. | 1-12 |
| Y | JP 2016-146232 A (SANYO ELECTRIC CO., LTD.) 12 August 2016 (2016-08-12) See paragraphs [0016], [0020], [0030]-[0035], [0044]-[0048], [0055] and [0075]. | 1-12 |
| A | JP 2014-203515 A (NIPPON ZEON CO., LTD. et al.) 27 October 2014 (2014-10-27) See entire document. | 1-12 |
| A | KR 10-2021-0095504 A (LG ENERGY SOLUTION, LTD.) 02 August 2021 (2021-08-02) See entire document. | 1-12 |
| A | KR 10-2022-0011590 A (LG ENERGY SOLUTION, LTD.) 28 January 2022 (2022-01-28) See entire document. | 1-12 |

☐ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 May 2023 | 12 May 2023 |

| Name and mailing address of the ISA/KR | Authorized officer |
|---|---|
| Korean Intellectual Property Office Government Complex-Daejeon Building 4, 189 Cheongsa-ro, Seo-gu, Daejeon 35208 | |
| Facsimile No. +82-42-481-8578 | Telephone No. |

Form PCT/ISA/210 (second sheet) (July 2022)

| INTERNATIONAL SEARCH REPORT<br>Information on patent family members | | | International application No.<br>**PCT/KR2023/001518** | | | |
|---|---|---|---|---|---|---|

| Patent document<br>cited in search report | | Publication date<br>(day/month/year) | Patent family member(s) | | | Publication date<br>(day/month/year) |
|---|---|---|---|---|---|---|
| KR 10-2015-0132319 | A | 25 November 2015 | CN | 105051944 | A | 11 November 2015 |
| | | | CN | 105051944 | B | 02 April 2019 |
| | | | EP | 2973789 | A1 | 20 January 2016 |
| | | | EP | 2973789 | A4 | 26 October 2016 |
| | | | EP | 2973789 | B1 | 08 May 2019 |
| | | | JP | 2016-511527 | A | 14 April 2016 |
| | | | KR | 10-2026508 | B1 | 27 September 2019 |
| | | | US | 10333134 | B2 | 25 June 2019 |
| | | | US | 11245103 | B2 | 08 February 2022 |
| | | | US | 2014-0272597 | A1 | 18 September 2014 |
| | | | US | 2017-0352863 | A1 | 07 December 2017 |
| | | | US | 2019-0229323 | A1 | 25 July 2019 |
| | | | US | 9728768 | B2 | 08 August 2017 |
| | | | WO | 2014-151385 | A1 | 25 September 2014 |
| JP 2016-146232 | A | 12 August 2016 | WO | 2014-192286 | A1 | 04 December 2014 |
| JP 2014-203515 | A | 27 October 2014 | JP | 6000182 | B2 | 28 September 2016 |
| KR 10-2021-0095504 | A | 02 August 2021 | None | | | |
| KR 10-2022-0011590 | A | 28 January 2022 | CN | 114365312 | A | 15 April 2022 |
| | | | EP | 4016669 | A1 | 22 June 2022 |
| | | | KR | 10-2460812 | B1 | 03 November 2022 |
| | | | US | 2022-0359867 | A1 | 10 November 2022 |
| | | | WO | 2022-019630 | A1 | 27 January 2022 |

Form PCT/ISA/210 (patent family annex) (July 2022)

**REFERENCES CITED IN THE DESCRIPTION**

**Patent documents cited in the description**

- KR 1020220016609
- JP 2009080971 A